# EUROPÄISCHE PATENTANMELDUNG

(11) **EP 0 992 403 A2**
(43) Veröffentlichungstag der Anmeldung: **12.04.2000**
(21) Anmeldenummer: 99117498.8
(22) Anmeldetag: 13.09.1999
(51) Int. Cl.: B60R 21/16

(54) **Gewebeteil zur Anordnung im Inneren eines Gassacks eines Fahrzeuginsassen-Rückhaltesystems**

(30) Priorität: 21.09.1998 DE 29816905 U
(71) Anmelder: TRW Occupant Restraint Systems GmbH & Co. KG, 73551 Alfdorf (DE)
(72) Erfinder: Ellerbrok, Norbert, 73553 Alfdorf (DE); Lang, Norbert, 73575 Leinzell (DE)
(74) Vertreter: Sties, Jochen, Dipl.-Ing.

(57) **Zusammenfassung**

Ein Gewebeteil (10) zur Anordnung mi Inneren eines Gassacks eines Fahrzeuginsassen-Rückhaltesystems weist im flach ausgebreiteten Zustand einen allgemein rechteckigen Mittelabschnitt (12) sowie vier Befestigungsabschnitte (14) aufweist, wobei die Befestigungsabschnitte (14) an den kürzeren Außenrändern des Mittelabschnitts (12) derart angeordnet sind, daß sie sich jeweils ausgehend von den längeren Außenrändern entlang den kürzeren Außenrändern zur Mittellängsachse des Mittelabschnitts (12) hin erstrecken, wobei die Befestigungsabschnitte (14) jeweils im Abstand von der Mittellängsachse enden.

## Beschreibung

Die Erfindung betrifft ein Gewebeteil zur Anordnung im Inneren eines Gassacks eines Fahrzeuginsassen-Rückhaltesystems. Ein solches Gewebeteil wird insbesondere dazu verwendet, den nach Aktivierung eines Gasgenerators in das Innere des Gassacks eintretenden, heißen Druckgasstrom in einer gewünschten Richtung umzulenken. Dies verhindert, daß das heiße Druckgas direkt auf die Wandung des Gassacks auftrifft und diese beschädigt. Weiterhin kann durch die gezielte Umlenkung des Druckgasstromes das Entfaltungsverhalten des Gassacks in weitem Maße beeinflußt werden. Je nach der Richtung des Einströmens des Druckgases in den Gassack kann beispielsweise erreicht werden, daß der Gassack sich zuerst in seitlicher Richtung entfaltet und erst gegen Ende des Entfaltungsvorgangs zum Fahrzeuginsassen hin.

Die Erfindung schafft ein Gewebeteil, das im Inneren des Gassacks angeordnet werden kann und sich durch eine besonders einfache Herstellbarkeit auszeichnet. Gemäß der Erfindung zeichnet sich das Gewebeteil dadurch aus, daß es im flach ausgebreiteten Zustand einen allgemein rechteckigen Mittelabschnitt sowie vier Befestigungsabschnitte aufweist, wobei die Befestigungsabschnitte an den kürzeren Außenrändern des Mittelabschnitts derart angeordnet sind, daß sie sich jeweils ausgehend von den längeren Außenrändern entlang den kürzeren Außenrändern zur Mittellängsachse des Mittelabschnitts hin erstrecken, wobei die Befestigungsabschnitte jeweils im Abstand von der Mittellängsachse enden. Das Gewebeteil kann somit ausgehend von einem ebenen Zuschnitt erhalten werden. Da dieser Zuschnitt rechteckig ist, entsteht beim Zuschneiden nahen kein Abfall.

Vorteilhafte Ausgestaltungen der Erfindung ergeben sich aus den Unteransprüchen.

Die Erfindung wird nachfolgend unter Bezugnahme auf eine bevorzugte Ausführungsform beschrieben, die in den beigefügten Zeichnungen dargestellt ist. In diesen zeigen:
- Figur 1 eine Draufsicht auf das ausgeschnittene Gewebeteil im flach ausgebreiteten Zustand;
- Figur 2 in einer perspektivischen Ansicht das Gewebeteil in einem vernähten, dreidimensionalen Zustand;
- Figur 3 in einer abgewickelten Darstellung das Gewebeteil von Figur 2;
- Figur 4 in einer ersten Seitenansicht das an einem Halterahmen befestigte Gewebeteil;
- Figur 5 in einer Unteransicht den Halterahmen mit daran befestigtem Gewebeteil; und
- Figur 6 in einer zweiten Seitenansicht das an dem Halterahmen befestigte Gewebeteil.

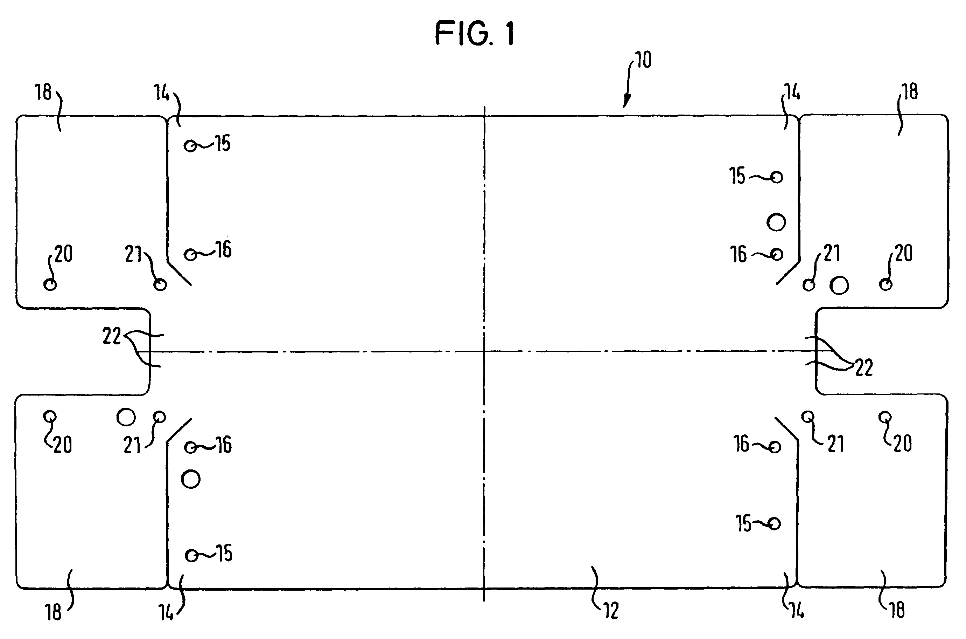

In Figur 1 ist in ausgebreitetem Zustand das Gewebeteil 10 gezeigt, das einstückig aus einer Gewebebahn zugeschnitten werden kann. Das Gewebeteil 10 enthält einen Mittelabschnitt 12, der mit vier Befestigungsabschnitten 14 versehen ist. Jeder Befestigungsabschnitt 14 erstreckt sich entlang einem der kürzeren Außenränder des Mittelabschnitts 12 ausgehend von einem längeren Außenrand zur Mittellängsachse hin, wobei die Befestigungsabschnitte in einem Abstand von der Mittellängsachse enden. Jeder Befestigungsabschnitt 14 ist mit zwei Öffnungen 15, 16 versehen.

Angrenzend an jeden Befestigungsabschnitt 14 ist ein rechteckiger Verstärkungsabschnitt 18 angeordnet. Jeder Verstärkungsabschnitt 18 ist mit zwei Öffnungen 20, 21 versehen. Die in dem Befestigungsabschnitt 14 angeordneten Öffnungen 15, 16 liegen auf einer Geraden, die senkrecht zu der Geraden ist, auf der die Öffnungen 20, 21 des Verstärkungsabschnitts 18 angeordnet sind.

Jeder Verstärkungsabschnitt 18 ist mit dem Mittelabschnitt 12 durch einen Übergangsabschnitt 22 verbunden, der sich an den entsprechenden kürzeren Außenrand in einem Bereich zwischen der Mittellängsachse des Mittelabschnitts 12 und dem Befestigungsabschnitt 14 anschließt. An jeden der kürzeren Außenränder schließen sich somit ein Befestigungsabschnitt 14, zwei Übergangsabschnitte 22 und ein weiterer Befestigungsabschnitt 14 an, wobei die beiden Befestigungsabschnitte zusammen etwa zwei Drittel der Länge des entsprechenden kürzeren Außenrandes einnehmen.

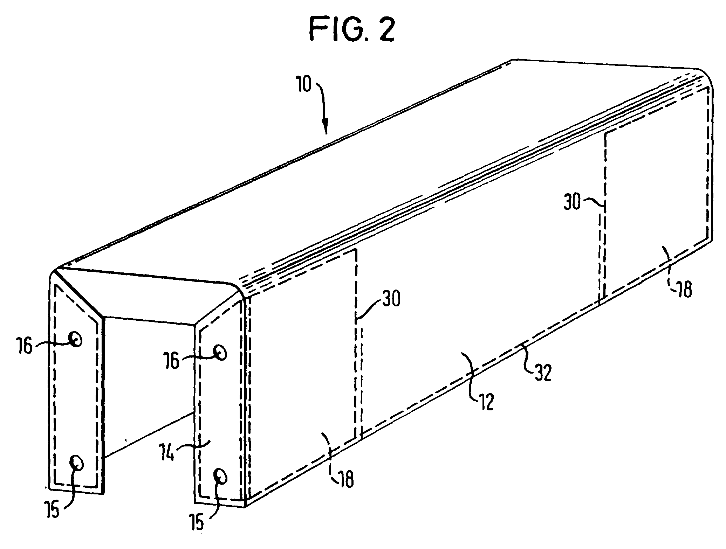

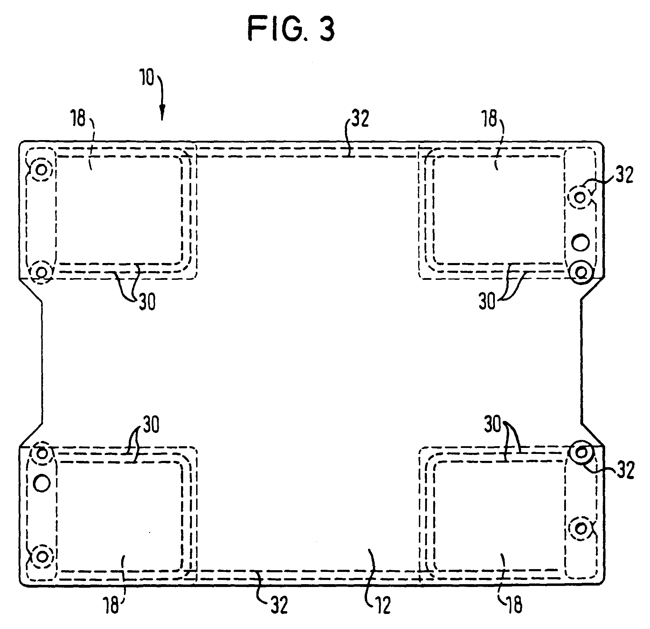

In Figur 2 ist das Gewebeteil 10 in einem dreidimensionalen, zusammengenähten Zustand gezeigt. Dieser wird ausgehend von dem zweidimensionalen, in Figur 1 gezeigten Zuschnitt in der folgenden Weise erhalten: Die Verstärkungsabschnitte 18 werden derart auf die Seite des Mittelabschnitts 12, die später die Innenseite des Gewebeteils bilden soll, geschoben und gedreht, daß die Öffnung 21 des Verstärkungsteils 18 mit der Öffnung 16 des Befestigungsabschnitts 14 übereinstimmt und die Öffnung 20 des Verstärkungsabschnitts mit der Öffnung 15 des Befestigungsabschnitts übereinstimmt. Zu diesem Zweck müssen die Verstärkungsabschnitte 18 um etwa 90° um einen Punkt gedreht werden, der im Bereich des Verbindungsabschnitts 22 liegt, sowie um ebenfalls etwa 90° um eine Kante geklappt werden, die sich im Bereich des Verbindungsabschnitts 22 befindet. Wenn dann die Verstärkungsabschnitte 18 mit den Befestigungsabschnitten 14 und dem Mittelabschnitt 12 vernäht werden, ergibt sich die in Figur 2 gezeigte, etwa wannenförmige Gestalt (hier umgedreht gezeigt), bei der der Mittelabschnitt 12 die beiden Seitenwände und den Boden der Wanne bildet. Die Befestigungsabschnitte 14 bilden einen Teil der Stirnseiten der Wanne, wobei zwischen den einander gegenüberliegenden Befestigungsabschnitten ein Durchgang verbleibt. In den Figuren 2 und 3 sind Nähte, mittels denen die Verstärkungsabschnitte 18 mit dem Befestigungsabschnitt 14 und dem Mittelabschnitt 12 verbunden sind, mit dem Bezugszeichen 30 versehen. Nähte, die lediglich zur Verstärkung des Außenrandes beziehungsweise der Öffnungen 15, 16, 20, 21 dienen, sind mit dem Bezugszeichen 32 versehen.

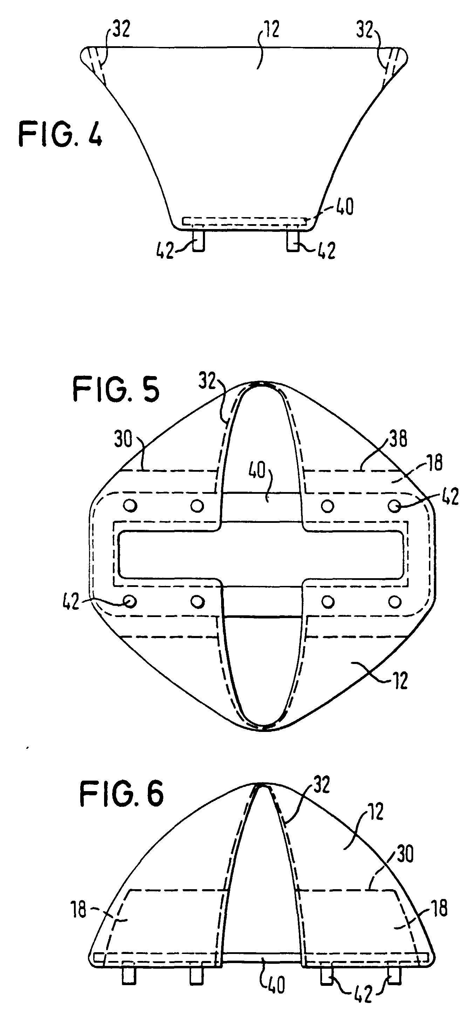

In den Figuren 4 bis 6 ist das fertig zusammengenähte Gewebeteil 12 gezeigt, das an einem Halterahmen 40 angebracht ist. Der Halterahmen dient dazu, einen Gassack am Gehäuse des Gassackmoduls zu befestigen. Hierzu dienen in den Halterahmen 40 eingelassene Befestigungsbolzen 42, die durch die Öffnungen 15, 16, 20, 21 hindurchtreten.

Wenn das Gewebeteil 12 am Halterahmen 40 befestigt ist, befinden sich die Befestigungsabschnitte 14 in ein und derselben Ebene. Der Teil des Mittelabschnitts 12, der vorher den Boden der von dem Mittelabschnitt gebildeten Wanne dargestellt hat, erstreckt sich nun ausgehend von einer Stirnseite des Rahmens in einem Bogen zur anderen Stirnseite. Die längeren Außenränder des Mittelabschnitts 12 erstrecken sich etwa in der Form einer halben Ellipse ausgehend von der entsprechenden Längsseite des Halterahmens.

Das Gewebeteil 10 bildet somit eine Vorkammer über dem Halterahmen 40. Druckgas, das durch den Halterahmen 40 hindurch in diese Vorkammer einströmt, tritt aus der Vorkammer durch zwei Austrittsöffnungen aus, die jeweils zwischen dem Halterahmen und einem der längeren Außenränder des Mittelabschnitts gebildet sind. Auf diese Weise ist die Ausströmrichtung des Druckgases vorgegeben.

## Patentansprüche

1. Gewebeteil (10) zur Anordnung im Inneren eines Gassacks eines Fahrzeuginsassen-Rückhaltesystems, wobei das Gewebeteil (10) im flach ausgebreiteten Zustand einen allgemein rechteckigen Mittelabschnitt (12) sowie vier Befestigungsabschnitte (14) aufweist, wobei die Befestigungsabschnitte (14) an den kürzeren Außenrändern des Mittelabschnitts (12) derart angeordnet sind, daß sie sich jeweils ausgehend von den längeren Außenrändern entlang den kürzeren Außenrändern zur Mittellängsachse des Mittelabschnitts (12) hin erstrecken, wobei die Befestigungsabschnitte (14) jeweils im Abstand von der Mittellängsachse enden.

2. Gewebeteil nach Anspruch 1, dadurch gekennzeichnet, daß an den kürzeren Außenrändern des Mittelabschnitts (12) in den nicht von den Befestigungsabschnitten (14) eingenommenen Bereichen allgemein rechteckige Verstärkungsabschnitte (18) mittels Übergangsabschnitten (22) angeschlossen sind.

3. Gewebeteil nach Anspruch 2, dadurch gekennzeichnet, daß die Übergangsabschnitte (22) von an demselben kürzeren Außenrand angeordneten Verstärkungsabschnitten (18) aneinander angrenzen und sich zusammen über sämtliche Bereiche des kürzeren Außenrandes erstrecken, über die sich nicht die Befestigungsabschnitte (14) erstrecken.

4. Gewebeteil nach Anspruch 3, dadurch gekennzeichnet, daß die an demselben kürzeren Außenrand angeordneten Befestigungsabschnitte (14) sich zusammen über etwa zwei Drittel von dessen Länge und die an diesem Außenrand angeordneten Übergangsabschnitte (22) sich über etwa ein Drittel dieser Länge erstrecken.

5. Gewebeteil nach einem der Ansprüche 2 bis 4, dadurch gekennzeichnet, daß in den Befestigungsabschnitten (14) und den Verstärkungsabschnitten (18) jeweils zwei Öffnungen (15, 16; 20, 21) für den Durchtritt von Befestigungsbolzen (42) ausgebildet sind.

6. Gewebeteil nach Anspruch 5, dadurch gekennzeichnet, daß die beiden in einem Befestigungsabschnitt (14) ausgebildeten Öffnungen (15, 16) auf einer Geraden liegen, die senkrecht zu einer Geraden ist, auf der die beiden Öffnungen (20, 21) des an den entsprechenden Befestigungsabschnitt (14) angrenzenden Verstärkungsabschnitts (18) liegen.

7. Gewebeteil nach einem der Ansprüche 2 bis 6, dadurch gekennzeichnet, daß jeder Verstärkungsabschnitt (18) mit dem zugehörigen Befestigungsabschnitt (14) so vernäht ist, daß die Öffnungen (15, 16; 20, 21) in dem Verstärkungsabschnitt (22) und dem Befestigungsabschnitt (14) übereinanderliegend angeordnet sind, wodurch das Gewebeteil (10) eine dreidimensionale, wannenartige Gestalt annimmt, wobei der Mittelabschnitt (12) die beiden Seitenwände und den Boden der Wanne bildet und jeweils zwei Befestigungsabschnitte (14) die Stirnseiten der Wanne bilden, wobei zwischen den einander gegenüberliegenden Befestigungsabschnitten (14) ein Durchgang verbleibt.

8. Gewebeteil nach Anspruch 7, dadurch gekennzeichnet, daß das vernähte Gewebeteil (10) mit seinen Öffnungen (15, 16; 20, 21) auf Befestigungsbolzen aufgezogen ist, die in einen Halterahmen (40) für ein Gassack-Modul eingelassen sind, wobei sich die Befestigungsabschnitte (14) in einer Ebene befinden und das Gewebeteil (10) eine Vorkammer bildet, deren Boden durch den Halterahmen (40) bestimmt ist, wobei in die Vorkammer einströmendes Druckgas aus der Vorkammer durch zwei Austrittsöffnungen austreten kann, die jeweils zwischen dem Halterahmen (40) und einem der längeren Außenränder des Mittelabschnitts (12) gebildet sind.
